Europäisches Patentamt

European Patent Office

Office européen des brevets

(19)

(11) Numéro de publication: **0 135 399**
**A1**

(12) **DEMANDE DE BREVET EUROPEEN**

(21) Numéro de dépôt: **84400965.4**

(22) Date de dépôt: **11.05.84**

(51) Int. Cl.⁴: **H 04 N 5/21**
**H 04 N 5/228**

(30) Priorité: **20.05.83 FR 8308424**

(43) Date de publication de la demande:
**27.03.85 Bulletin 85/13**

(84) Etats contractants désignés:
**BE DE GB NL**

(71) Demandeur: **THOMSON-CSF**
**173, Boulevard Haussmann**
**F-75379 Paris Cedex 08(FR)**

(72) Inventeur: **Lacoste, Jean-Pierre**
**c/o THOMSON-CSF SCPI 173 bld Haussmann**
**F-75379 Paris Cédex 08(FR)**

(74) Mandataire: **Lincot, Georges et al,**
**THOMSON-CSF SCPI 173, Bld Haussmann**
**F-75379 Paris Cedex 08(FR)**

(54) **Dispositif de correction anti-halo pour tube analyseur de caméra de télévision.**

(57) Le dispositif de correction anti-halo selon l'invention comprend un circuit intégrateur (4) pour intégrer le signal vidéo fourni par l'amplificateur (2) de signal vidéo placé à la sortie du tube analyseur, un circuit à découpage (6) pour hacher le signal vidéo produit par l'intégrateur à la fréquence de blocage du balayage ligne de la cible du tube et un circuit de couplage (7, 16) pour ajouter, à l'entrée de l'amplificateur vidéo, le signal produit à la sortie du circuit à découpage (6) au signal fourni par la sortie du tube analyseur (3). La sortie du circuit intégrateur (4) est couplée à l'entrée du circuit à découpage (6) par l'intermédiaire d'un circuit de correction (5) adapté pour que la variation de la tension obtenue sur sa sortie en fonction du niveau du signal appliqué sur son entrée par le circuit intégrateur (4) suive une loi à peu près identique à la loi de variation du niveau de noir du signal vidéo fourni par le tube analyseur en fonction de l'éclairement de la cible du tube, de manière à aligner le niveau du noir du signal vidéo obtenu en sortie de l'amplificateur vidéo sur un niveau de référence du noir constant.

Application: caméra de prise de vue de télévision.

Fig.6

EP 0 135 399 A1

1

## Dispositif de correction anti-halo pour tube
## analyseur de caméra de télévision

L'invention concerne un dispositif de correction anti-halo pour tube analyseur de caméra de télévision notamment, de caméra pour la transmission de signaux de télévision en couleurs.

On sait que dans les tubes analyseurs d'image la redistribution d'un nombre important d'électrons secondaires autour des zones les plus éclairées de la cible se traduit par la formation de halos ou taches de diffusion plus ou moins grises entourant chaque zone. Pour corriger ce défaut il est connu de placer à la sortie du tube analyseur un circuit de correction dans le but de maintenir constant le niveau du noir en sortie de la caméra quelque soit le contenu de l'image et son niveau d'éclairement.

Les circuits de correction connus ont pour principal inconvénient d'effectuer la correction du niveau de noir selon une loi linéaire en fonction de l'éclairement de la scène à analyser alors que, la caractéristique de halo en fonction de l'éclairement de la cible du tube n'obéit pas à cette loi linéaire, ce qui conduit, pour les éclairements intenses, à des signaux vidéo corrigés de façon imparfaite, où les niveaux de noirs sont renforcés exagérément, ce qui peut donner lieu à des pertes d'informations dans les gris de l'image.

Le but de l'invention est de pallier les inconvénients précités.

A cet effet, l'invention a pour objet un dispositif de correction anti-halo pour tube analyseur de caméra de télévision du type comprenant, un circuit intégrateur pour intégrer le signal vidéo fourni par l'amplificateur de signal vidéo placé à la sortie du tube, un circuit à découpage pour hacher le signal produit par l'intégrateur à la fréquence de blocage du balayage ligne de la cible du tube et un circuit de couplage pour ajouter, à l'entrée de l'amplificateur vidéo, le signal produit à la sortie du circuit à découpage au signal fourni par la sortie du tube analyseur et dans lequel la sortie du circuit intégrateur est couplée à l'entrée du circuit à découpage par l'intermédiaire d'un circuit de correction adapté pour que, la variation de la tension obtenue sur sa sortie en fonction du niveau du signal appliqué à son entrée par le circuit intégrateur suive une loi à peu près identique à la loi de variation du niveau de noir du signal vidéo fourni par le tube analyseur en fonction de l'éclairement de la cible du tube, de manière à aligner le niveau du noir du signal vidéo obtenu en sortie de l'amplificateur vidéo sur un niveau de référence du noir constant, caractérisé en ce que le circuit de correction est constitué par un amplificateur ayant une première caractéristique de gain pour amplifier la valeur moyenne du signal vidéo lorsque cette valeur correspond à un éclairement de la cible du tube en dessous de la valeur nominale d'éclairement et ayant au moins une deuxième caractéristique de gain pour amplifier la valeur moyenne du signal vidéo lorsque cette valeur correspond à un éclairement de la cible du tube situé au-dessus de la valeur nominale d'éclairement.

Le dispositif selon l'invention a pour principal avantage qu'il permet de corriger efficacement les variations du niveau du noir obtenues en sortie des tubes analyseurs quel que soit le contenu des images analysées, leur proportion de blanc par rapport au noir, et quel que soit leur niveau d'éclairement. Le dispositif selon l'invention est particulièrement bien adapté à l'utilisation des tubes analyseurs actuels à grande dynamique conçus pour analyser des scènes à fort éclairement.

D'autres caractéristiques et avantages de l'invention apparaîtront également à l'aide de la description qui va suivre faite au regard des dessins annexés qui représentent :

     - les figures 1 à 5 le principe de correction anti-halo selon l'invention ;

     - la figure 6 un exemple de réalisation d'un dispositif de correction anti-halo selon l'invention ;

     - les figures 7 à 11 une illustration du fonctionnement du dispositif de correction représenté à la figure 6 ;

     - la figure 12 une courbe de la caractéristique de gain de l'amplificateur de correction de la figure 6.

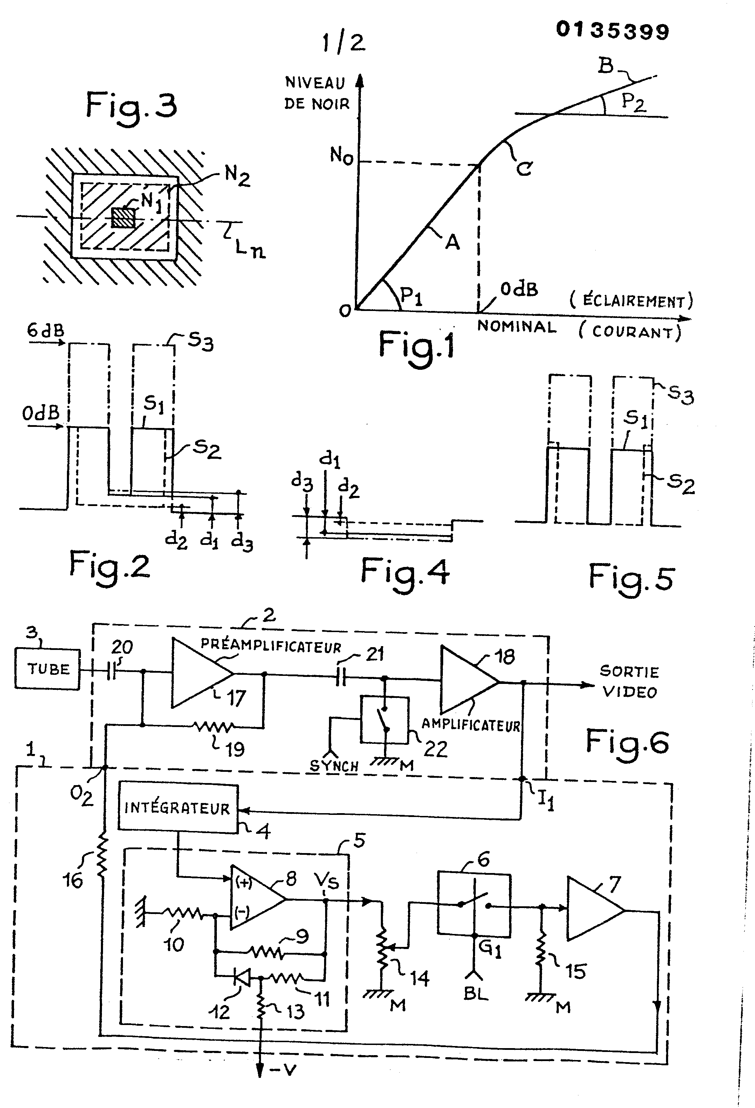

Le principe de la correction anti-halo d'un tube analyseur de caméra de télévision selon l'invention est décrit ci-après à l'aide des figures 1 à 5.

La figure 1 représente la courbe caractéristique de halo d'un tube analyseur d'image, référencée à l'intérieur d'un système de coordonnées orthonormées comprenant, un axe des abscisses sur lequel sont portées les valeurs d'éclairement de la cible du tube analyseur et un axe des ordonnées sur lequel sont portés les niveaux de noir du signal vidéo produit à la sortie du tube analyseur en fonction des valeurs d'éclairement de la cible. La courbe représentée comprend trois parties A, B, C. Les parties A et B peuvent être assimilées à des droites de pentes respectives $P_1$, $P_2$, où $P_1$ est plus grand que $P_2$. Les parties A et B sont raccordées entre elles par une partie incurvée C. Dans la partie A, le niveau du noir varie proportionnellement à l'éclairement de la cible depuis une valeur nulle lorsque l'éclairement sur la cible est nul, jusqu'à une valeur d'éclairement nominale $N_o$ au-delà de laquelle la courbe s'infléchit dans la partie C pour redevenir à peu près linéaire dans la partie B. L'incidence de la courbe de halo sur le niveau de noir d'un signal vidéo fourni par un tube analyseur est montré à la figure 2 qui représente trois signaux vidéo $S_1$, $S_2$, $S_3$ en surimpression, correspondant à des images différentes représentées à la figure 3 par des rectangles noirs sur fond blanc, respectivement $N_1$, $N_2$ ayant des proportions de blanc par rapport au noir et des niveaux d'éclairement différents. Le signal $S_1$ résulte du balayage sur une ligne $L_n$ de la cible du tube analyseur du rectangle $N_1$ dont la proportion de noir par rapport au blanc est d'environ 10% et dont le niveau de luminance du blanc est à sa valeur nominale de 0 décibel. A cause du phénomène de halo, le niveau de noir du signal $S_1$ est décalé sur la figure 2 d'une distance $d_1$ par rapport au niveau du noir de référence.

Le signal $S_2$ correspond à un balayage sur la ligne $L_n$ de la cible du tube analyseur du rectangle $N_2$ correspondant à un niveau de noir par rapport au blanc de 90% et dont l'éclairement du blanc est à sa valeur nominale de 0 décibel. Dans ce cas, le niveau de noir du signal $S_2$ apparaît décalé d'une distance $d_2$ inférieure à $d_1$ par rapport au niveau de noir de référence.

Enfin, le signal $S_3$ qui correspond au balayage sur la même ligne $L_n$ du rectangle $N_1$ montre l'influence de l'éclairement sur les déplacements du niveau du noir. Le signal $S_3$ correspond à un éclairement de la cible de + 6 décibels par rapport à l'éclairement nominal de celle-ci et à un niveau de noir distant d'une distance $d_3$ plus grande que $d_1$ par rapport au niveau de référence.

Le principe de la stabilisation du niveau du noir selon l'invention consiste à appliquer en sortie du tube analyseur des signaux de correction, représentés à la figure 4, pour annuler les différences de niveau de noir $d_n$ telles que $d_1$, $d_2$ et $d_3$ provoquées par la caractéristique de halo du tube, à l'aide d'un dispositif de correction dont la dynamique est adaptée à la courbe caractéristique de halo du tube analyseur.

Un dispositif de correction mettant en oeuvre le principe de l'invention est représenté à la figure 6. Le dispositif de correction représenté en 1 sur la figure 6 à l'intérieur d'un rectangle en pointillés comprend un circuit intégrateur 4, un circuit de correction 5, un circuit à découpage 6 et un circuit d'adaptation 7, il est relié par une entrée $I_1$ à la sortie d'un amplificateur vidéo 2 dont l'entrée reçoit des signaux vidéo produits par la sortie d'un tube analyseur d'image 3. Le circuit intégrateur 4, constitué par une cellule passe-bas à résistance-capacité, non représentée, ou tout autre moyen équivalent, est couplé par son entrée à la sortie de l'amplificateur vidéo 2 par l'intermédiaire de l'entrée $I_1$ du dispositif de correction 1 et est couplé par sa sortie à l'entrée du circuit de correction 5. Le circuit de correction 5 comprend un amplificateur opérationnel différentiel muni d'une entrée marquée "+" et d'une entrée marquée "-". L'entrée marquée "+" est reliée à la sortie de l'intégrateur 4 et l'entrée marquée "-" est reliée, d'une part, à la sortie de l'amplificateur 8 au travers d'une résistance 9 et d'autre part, au circuit de masse M d'alimentation général du dispositif de correction au travers d'une résistance 10. La sortie de l'amplificateur 8 est également reliée à son entrée marquée "-" par l'intermédiaire d'une résistance 11 et d'une diode 12 reliées en série, la cathode de la diode 12 étant reliée à l'entrée marquée "-" de l'amplificateur 8. Le point de liaison commun d'une extrémité de la résistance 11 à l'anode de la diode 12 est également reliée à une source de tension -V de référence, externe au dispositif, non représentée, par l'intermédiaire d'une résistance 13. La sortie de l'amplificateur 8 joue le rôle de sortie du circuit de correction 5 et est reliée à l'entrée du circuit à découpage 6 par l'intermédiaire d'un atténuateur 14 formé par un potentiomètre dont le curseur est relié à l'entrée du circuit à découpage 6 et dont les extrémités d'alimentation sont reliées l'une à la sortie de l'amplificateur 8 et l'autre au circuit de masse d'alimentation générale du dispositif de correction. La sortie du circuit à découpage 6 est reliée d'une part, à l'entrée du circuit d'adaptation 7 et d'autre part, à la masse d'alimentation générale du dispositif de correction au travers d'une résistance 15. Le circuit à découpage 6 est commandé sur son entrée $G_1$ par les signaux BL de blocage ligne et trame du tube analyseur fournis par des circuits externes au dispositif de correction, non représentés. La sortie du circuit d'adaptation 7 est reliée à la sortie $0_2$ du dispositif de correction et à l'entrée de l'amplificateur vidéo 2 au travers d'une résistance 16. L'amplificateur vidéo 2 comprend de façon connue un pré-amplificateur inverseur 17 suivi d'un amplificateur 18. Le pré-amplificateur 17 a sa sortie rebouclée sur son entrée par l'intermédiaire d'une résistance 19. L'entrée du pré-amplificateur 17 est reliée à la sortie de signal du tube analyseur par l'intermédiaire d'un condensateur 20. La sortie du pré-amplificateur 19 est couplée, de façon connue, à l'entrée de l'amplificateur 18 par un circuit d'alignement, constitué par un condensateur 21 placé en série entre la sortie du pré-amplificateur 17 et l'entrée d'amplificateur 18 et par un dispositif de commutation 22 commandé par les impulsions SYNCH de synchronisation de ligne de balayage du tube analyseur, pour ramener à la masse le niveau de noir correspondant au blocage du tube à chaque apparition d'une impulsion de synchronisation de ligne.

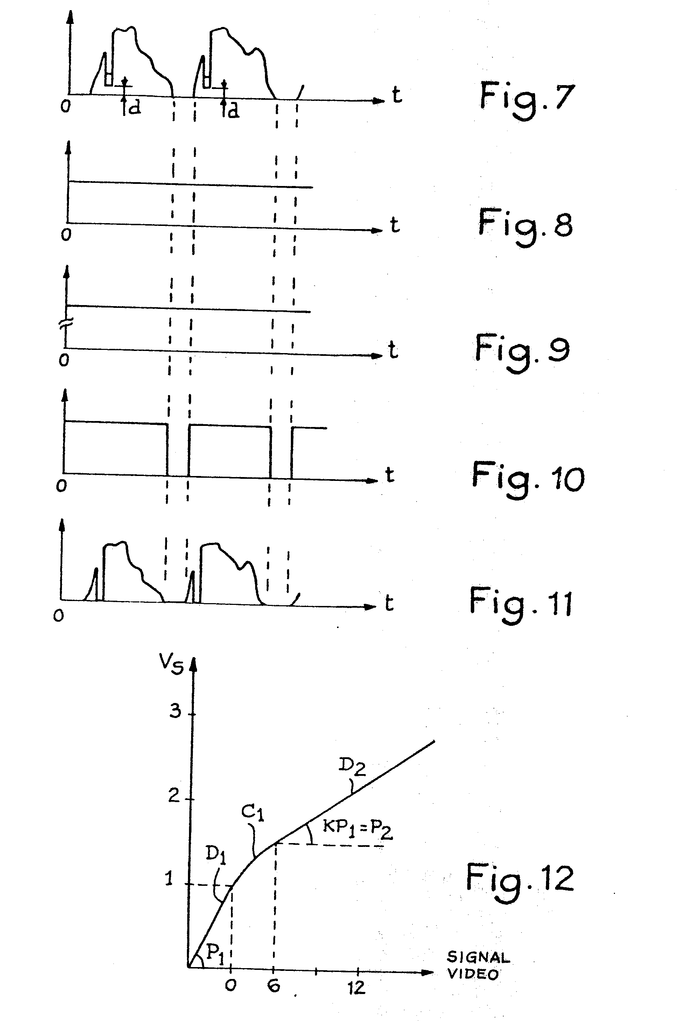

Le fonctionnement du dispositif de correction représenté à la figure 6 est maintenant décrit à l'aide des figures 7 à 12.

Le signal vidéo non corrigé produit en sortie de l'amplificateur 2 est représenté à la figure 7. Comme indiqué précédemment le niveau de noir de ce signal est décalé d'une distance d par rapport au niveau de noir de référence conformément à la caractéristique de halo du tube. Le signal vidéo est appliqué à l'entrée de l'intégrateur 4 qui transforme ce signal en un signal de niveau continu, représenté à la figure 8, correspondant à la valeur moyenne du signal vidéo. La tension de sortie de l'intégrateur est amplifiée dans le circuit de correction 5 par l'amplificateur à gain variable 8 dont la caractéristique de gain reproduit la caractéristique de halo de la figure 1. Cette caractéristique est définie comme l'indique la figure 12 qui représente la variation de la tension de sortie $V_S$ de l'amplificateur 8 portée sur l'axe des ordonnées en fonction de l'amplitude mesurée en décibels du signal vidéo produit à la sortie de l'amplificateur 2 et indiquée en abscisses sur la figure 12. La figure 12 montre que pour des valeurs du signal vidéo correspondant à des éclairements de la cible du tube analyseur inférieures au niveau nominal de 0 décibel, la tension de sortie de l'amplificateur 8 évolue linéairement en fonction de l'amplitude du signal vidéo selon une droite $D_1$ de pente $P_1$ définie par la relation $1 + \beta$ où $\beta$ correspond au rapport des valeurs des résistances 9 et 10 du circuit de correction 5. Lorsque l'amplitude du signal vidéo correspond à un niveau d'éclairement de la cible du tube analyseur supérieur au niveau nominal de 0 décibel, le dispositif à seuil formé par la diode 12, les résistances 11 et 13 provoquent une modification du gain du circuit de correction 5 pour faire varier la tension de sortie de l'amplificateur 8, en fonction de l'amplitude de signal vidéo fourni par l'amplificateur 2, selon une droite $D_2$ de pente $P_2 = K\,P_1$ correspondant à la relation $1 + S(\frac{1}{1+\gamma})$ où S est égal au rapport des résistances 11 et 10 et $\gamma$ est égal au rapport des résistances 9 et 11. Le signal de sortie du circuit de correction 5 est représenté amplifié à la figure 9. Ce signal amplifié est ensuite ajusté par le potentiomètre 14, puis haché de la manière représentée à la figure 10 par le circuit à découpage 6 pendant la durée de blocage du tube. Pendant la durée du blocage du tube analyseur 3 la tension d'entrée du circuit à découpage 6 n'est pas retransmise à sa sortie et la différence de potentiel aux bornes de la résistance 15 est nulle. Lorsque le circuit à découpage 6 est commandé pendant la durée de balayage ligne du tube analyseur 3, la tension obtenue en sortie du potentiomètre 14 est appliquée aux bornes de la résistance 15 en parallèle sur l'entrée de l'adaptateur 7, lequel retransmet le signal correspondant à l'entrée de l'amplificateur vidéo 2 par l'intermédiaire de la résistance 16 pour ajouter le signal de correction ainsi obtenu, au signal vidéo appliqué à l'entrée du pré-amplificateur 17 par le tube analyseur 3, afin d'aligner des niveaux de noir du signal vidéo fournis par la sortie de l'amplificateur vidéo 2 sur un niveau de référence du noir proche du potentiel de masse M du circuit d'alimentation général du dispositif de correction, de la manière représentée à la figure 11.

Bien que le principe de la présente invention a été décrit ci-dessus en relation avec un exemple particulier de réalisation, il faut comprendre que sa description n'a été faite qu'à titre d'exemple et ne limite pas la portée de l'invention.

D'autres variantes sont en effet possibles notamment, pour adapter en fonction de chaque cas particulier d'utilisation les caractéristiques des circuits de correction aux caractéristiques de halo des tubes analyseurs qui peuvent varier en fonction du modèle de tube utilisé. Cette adaptation pourra s'effectuer de façon simple en ajustant, soit le seuil de basculement de la caractéristique de gain du circuit de correction 8, soit en augmentant le nombre de seuils à l'aide de circuits à seuils similaires à celui formé par les éléments 11, 12, 13 précédemment décrits, pour permettre au circuit de correction 5 de basculer sur un nombre plus important de caractéristiques de gain différentes.

REVENDICATIONS

1. Dispositif de correction anti-halo pour tube analyseur de caméra de télévision du type comprenant, un circuit intégrateur (4) pour intégrer le signal vidéo fourni par l'amplificateur (2) de signal vidéo placé à la sortie du tube, un circuit à découpage (6) pour hacher le signal vidéo produit par l'intégrateur à la fréquence de blocage du balayage ligne de la cible du tube et un circuit de couplage (7, 16) pour ajouter, à l'entrée de l'amplificateur vidéo, le signal produit à la sortie du circuit à découpage (6) au signal fourni par la sortie du tube analyseur (3) et dans lequel la sortie du circuit intégrateur (4) est couplée à l'entrée du circuit à découpage (6) par l'intermédiaire d'un circuit de correction (5) adapté pour que la variation de la tension obtenue sur sa sortie en fonction du niveau du signal appliqué sur son entrée par le circuit intégrateur (4) suive une loi à peu près identique à la loi de variation du niveau de noir du signal vidéo fourni par le tube analyseur en fonction de l'éclairement de la cible du tube, de manière à aligner le niveau du noir du signal vidéo obtenu en sortie de l'amplificateur vidéo sur un niveau de référence du noir constant, caractérisé en ce que le circuit de correction (5) est constitué par un amplificateur (8) ayant une première caractéristique de gain pour amplifier la valeur moyenne du signal vidéo lorsque cette valeur correspond à un éclairement de la cible du tube en dessous de la valeur nominale d'éclairement et ayant au moins une deuxième caractéristique de gain pour amplifier la valeur moyenne du signal vidéo lorsque cette valeur correspond à un éclairement de la cible du tube situé au-dessus de la valeur nominale d'éclairement.

2. Dispositif selon la revendication 1, caractérisé en ce que la commutation de l'amplificateur de la première caractéristique de gain sur au moins une deuxième caractéristique de gain a lieu lorsque le niveau de signal fourni par l'intégrateur et appliqué à l'entrée de l'amplificateur dépasse un seuil prédéterminé.

3. Dispositif selon l'une quelconque des revendications 1 et 2, caractérisé en ce que le dispositif amplificateur (8) est un amplificateur différentiel couplé par son entrée marquée ("+") à la sortie de l'intégrateur (4) et dont l'entrée marquée ("-") est reliée d'une part à la masse d'alimentation générale du dispositif de correction par l'intermédiaire d'une première résistance (10) et d'autre part, à sa sortie par l'intermédiaire d'une deuxième résistance (9).

4. Dispositif selon l'une quelconque des revendications 1 à 3, caractérisé en ce que l'amplificateur (8) du circuit de correction (5) comprend un dispositif à seuil, couplé entre la sortie et l'entrée marquée ("-") de l'amplificateur pour commuter de la première caractéristique de gain sur au moins une deuxième caractéristique de gain.

5. Dispositif selon la revendication 4, caractérisé en ce que le dispositif à seuil comprend au moins une diode (12) et une première résistance (11) reliées en série entre la sortie et l'entrée marquée ("-") de l'amplificateur (8), le point commun à la résistance et à la diode étant relié à une source de tension de référence par l'intermédiaire d'une deuxième résistance (13).

6. Dispositif selon l'une quelconque des revendications 1 à 5, caractérisé en ce que la sortie du circuit de correction (5) est reliée à l'entrée du circuit de couplage par l'intermédiaire d'un circuit de réglage (14) de la tension fournie par la sortie du circuit de correction (5).

7. Dispositif selon la revendication 6, caractérisé en ce que le circuit de réglage (14) est un potentiomètre.

0135399

Fig.3

Fig.1

NIVEAU DE NOIR

Fig.2

Fig.4

Fig.5

Fig.6

Fig.7

Fig.8

Fig.9

Fig.10

Fig.11

Fig.12

Office européen
des brevets

**RAPPORT DE RECHERCHE EUROPEENNE**

**0135399**
Numéro de la demande

EP    84 40 0965

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int Cl 4) |
|---|---|---|---|
| A | NL-A-7 700 506  (PHILIPS) <br> * Page 4, ligne 25 - page 5, ligne 30 * | 1,6,7 | H 04 N    5/21 <br> H 04 N    5/228 |
| A | FR-A-2 293 115  (COMPTEURS SCHLUMBERGER) <br> * Page 5, ligne 23 - page 6, ligne 4 * | 1,6,7 | |
| A | GB-A-2 054 318  (PHILIPS) | | |
| A | FR-A-2 306 580  (NORTH AMERICAN PHILIPS) | | |

-----

| | DOMAINES TECHNIQUES RECHERCHES (Int. Cl.4) |
|---|---|
| | H 04 N |

Le présent rapport de recherche a été établi pour toutes les revendications

| Lieu de la recherche | Date d'achèvement de la recherche | Examinateur |
|---|---|---|
| LA HAYE | 05-09-1984 | CRISTOL Y. |